# EUROPÄISCHE PATENTANMELDUNG

(11) **EP 0 921 453 A1**
(43) Veröffentlichungstag der Anmeldung: **09.06.1999**
(21) Anmeldenummer: 98122830.7
(22) Anmeldetag: 01.12.1998
(51) Int. Cl.: G05B 19/10, G05D 23/19

(54) **Regelgerät mit Anzeige zusätzlicher Information**

(30) Priorität: 06.12.1997 DE 29721403 U
(71) Anmelder: VIESSMANN WERKE GmbH & CO., 35107 Allendorf/Eder (DE)
(72) Erfinder: Daffner, Klaus-Josef Dr., 61440 Oberursel (DE)
(74) Vertreter: Wolf, Günter, Dipl.-Ing.

(57) **Zusammenfassung**

Die Erfindung betrifft ein Regelgerät insbesondere für Heizungsanlagen, bestehend aus einem Gehäuse (1) mit innen angeordneter Reglerelektronik und mit in der sicht- und zugriffszugänglichen Frontfläche (F) angeordneten, mit der Reglerelektronik entsprechend verschalteten Bedientasten (B) und einem Display (2).
Um Zusatzinformationen abrufen zu können, ist nach der Erfindung vorgesehen, daß zur numerischen, graphischen und/oder Klartextdarstellung von Zusatzinformationen in der Frontfläche (F) außer den Bedientasten eine über jede Bedientaste mit der Reglerelektronisch logisch verknüpfbare Informationstaste (4) angeordnet ist.

## Beschreibung

Die Erfindung betrifft ein Regelgerät, insbesondere für Heizungsanlagen, bestehend aus einem Gehäuse mit innen angeordneter Reglerelektronik und mit in der sicht- und zugriffszugänglichen Frontfläche angeordneten, mit der Reglerelektronik entsprechend verschalteten Bedientasten und einem Display.

Derartige Reglergeräte sind allgemein und insbesondere auch für Heizungsanlagen bekannt, von denen aus alle notwendigen Regel- und Steuervorgänge an einem Heizkessel und der zugehörigen Heizungsanlage vorgenommen bzw. ggf. auch zeitabhängig eingestellt werden können. Mit den in der Frontfläche angeordneten Bedientasten lassen sich die gewünschten und erforderlichen Funktionen eingeben bzw. einstellen, die auch als numerische Zeit- und Temperaturwerte via Reglerelektronik im Display sichtbar ausgewiesen werden. Ein Überblick über bspw. das gesamte Tages-Heizphasenprogramm ist dabei entweder nicht verfügbar oder die Darstellung ist durch zu viele gleichzeitige Informationen verwirrend.

Der Erfindung liegt, darauf gerichtet, die Aufgabe zugrunde, Regelgeräte der eingangs genannten Art dahingehend zu verbessern, daß funktionsspezifische "Zusatzinformationen" bei Bedarf ebenfalls abrufbar bzw. anzeigbar sind.

Gelöst ist diese Aufgabe mit einem Regelgerät der eingangs genannten Art nach der Erfindung dahingehend, daß in der Frontfläche außer den Bedientasten eine über jede Bedientaste mit der Reglerelektronik logisch verknüpfbare Informationstaste und im Display ein Zusatzinformationsfeld enthalten ist, in dem funktionsspezifische Zusatzinformationen numerisch, graphisch bzw. als Buchstaben oder im Klartext dargestellt werden.

Vorteilhafte Weiterbildungen bestehen darin, daß die sichtseitig durchleuchtbar ausgebildeten, die Bedienelemente bildenden Tasten mit bei Tastendruck aktivierbaren Lichtquellen versehen sind und daß auch die Informationstaste durchleuchtbar und mit bei Tastendruck aktivierbarer Lichtquelle versehen ist.

Durch diese neuartige Ausbildung des Regelgerätes ist es ohne weiteres möglich, derartige Zusatzinformationen durch Betätigung der Informationstaste abzurufen bzw. im Display erscheinen zu lassen, und zwar in jeweiliger Abhängigkeit von der unmittelbar vorher betätigten Funktionstaste. Wenn man also bspw. für einen bestimmten Tag die Dauer einer zweiten Heizphase per entsprechender Funktionstaste eingestellt hat, ist dann lediglich die "Zusatzinformationstaste" zu drücken, und es erscheint im Zusatzinformationsfeld des Displays die gesamte Heizphasenverteilung über den ganzen Tag.
Die oben angeführten vorteilhaften Weiterbildungen sorgen dabei automatisch dafür, daß der angesprochene bzw. angewählte Bedien- bzw. Funktionsbereich eindeutig ausgewiesen ist.

Das erfindungsgemäße Regelgerät wird nachfolgend anhand der zeichnerischen Darstellung eines Ausführungsbeispieles näher erläutert.

Es zeigt.
- Fig. 1: perspektivisch das Regelgerät;
- Fig. 2: vergrößert die Frontfläche des Regelgerätes mit seinen Bedientasten und dem Display und
- Fig. 3: schematisch eine bauliche Einzelheit.

Das Regelgerät besteht nach wie vor aus einem Gehäuse 1 mit darin angeordneter Reglerelektronik (nicht dargestellt) und mit in der sicht- und zugriffszugänglichen Frontfläche F angeordneten, mit der Reglerelektronik entsprechend verschalteten Bedientasten B und einem Display 2.

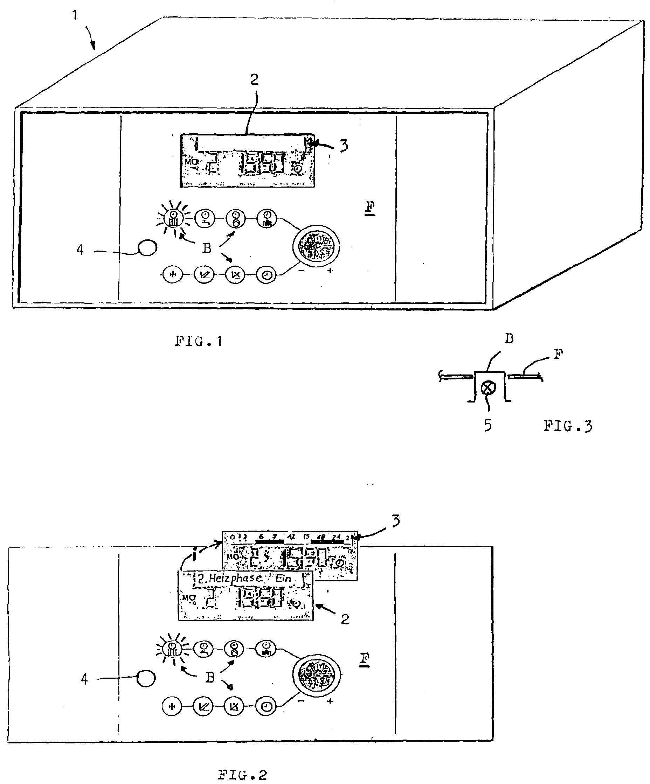

Orientiert an den Fig.1,2 ist für ein solches Regelgerät nunmehr wesentlich, daß in der Frontflache F außer den "normalen" Bedientasten B eine über jede Bedientaste B mit der Reglerelektronik verschaltbare Informationstaste 4 angeordnet und im Display 2 ein Zusatzinformationsfeld bzw. - informationsbereich enthalten ist.

Um zu verdeutlichen, was bei Betätigung der Informationstaste 4 geschieht, wird auf Fig.2 verwiesen, in der das Display 2, das tatsächlich nur einmal vorhanden ist, zweifach dargestellt ist. Mit Betätigung der mit Leuchtstrahlern versehenen Bedientasten B ist bspw. für den betreffenden Tag der Beginn der 2. Heizphase auf 15:50 eingestellt worden, wie dies das Display anzeigt. Mehr kann man aber normalerweise nicht erfahren.
Will man aber in diesem Falle die Heizphasenverteilung über den ganzen Tag ermitteln, so ist lediglich die Informationstaste 4 zu drücken, die dann die ganze Heizphasenverteilung einschließlich der neu eingegeben im Zusatzinformationsfeld 3 des Displays in Erscheinung treten läßt, d.h., beim dargestellten Ausführungsbeispiel wird angezeigt eine erste Heizphase von 5 bis 11 Uhr und die zweite Heizphase ab 15:50 bis 22:30 Uhr. Gleiches erfolgt bei Betätigung anderer Funktions- bzw. Bedientasten, zu denen gewünschte und relevante Zusatzinformationen ebenfalls durch die Zusatzinformationstaste 4 abrufbar sind.
Um, wie vorerwähnt, den Bereich deutlich zu halten, für den man die gewünschte Zusatzinforamtion haben möchte, sind die Bedientasten B von innen beleuchtbar ausgestaltet, d.h., mit einer Lichtquelle 5 (siehe Fig.3) ausgestattet, was im übrigen auch für die Informationstaste 4 vorgesehen werden kann.

## Patentansprüche

1. Regelgerät insbesondere für Heizungsanlagen bestehend aus einem Gehäuse (1) mit innen angeordneter Reglerelektronik und mit in der sicht- und zugriffszugänglichen Frontfläche (F) angeordneten, mit der Reglerelektronik entsprechend verschalteten Bedientasten (B) und einem Display (2),
**dadurch gekennzeichnet,**
daß zur numerischen, graphischen und/oder Klartextdarstellung von Zusatzinformationen im Display (2) in der Frontfläche (F) außer den Bedientasten (B) eine über jede Bedientaste mit der Reglerelektronik logisch verknüpfbare Informationstaste (4) angeordnet ist.

2. Regelgerät nach Anspruch 1,
**dadurch gekennzeichnet,**
daß im Display (2) ein Zusatzinformations-Darstellungsbereich (3) vorgesehen ist.

3. Regelgerät nach Anspruch 1 oder 2,
**dadurch gekennzeichnet,**
daß die sichseitig durchleuchtbar ausgebildeten, die Bedienelemente (B) bildenden Tasten mit bei Tastendruck aktivierbaren Lichtquellen (5) versehen sind.

4. Regelgerät nach einem der Ansprüche 1 bis 3,
**dadurch gekennzeichnet,**
daß auch die Informationstaste (3) durchleuchtbar und mit bei Tastendruck aktivierbarer Lichtquelle (5) versehen ist.
